# EUROPÄISCHE PATENTSCHRIFT

(11) **EP 0 477 723 B1**
(45) Veröffentlichungstag und Bekanntmachung des Hinweises auf die Patenterteilung: **30.11.1994**
(21) Anmeldenummer: 91115724.6
(22) Anmeldetag: 17.09.1991
(51) Int. Cl.: F16D 3/33

(54) **Doppelkreuzgelenk**
Double universal joint
Joint universel double

(30) Priorität: 27.09.1990 GB 9021021
(43) Veröffentlichungstag der Anmeldung: 01.04.1992
(73) Patentinhaber: GKN Cardantec International Gesellschaft für Antriebstechnik mbH, D-45143 Essen (DE)
(72) Erfinder: Fisher, Leslie George, Birmingham B74 2DD (GB)
(74) Vertreter: Harwardt, Günther, Dipl.-Ing.

(56) Entgegenhaltungen:
- FR-A- 1 486 469
- GB-A- 913 365
- US-A- 3 162 471
- US-A- 3 429 144

## Beschreibung

Die Erfindung betrifft ein Doppelkreuzgelenk mit zwei äußeren und zwei inneren, miteinander verbundenen Gelenkgabeln, wobei jeweils eine äußere und eine innere Gelenkgabel über ein Zapfenkreuz gelenkig miteinander verbunden sind und wobei die beiden äußeren Gelenkgabeln durch Zentriermittel einander gegenüber zentriert sind.

Eine solche Ausbildung ist in der US-A-3162471 beschrieben. Die aneinander angrenzenden Gelenkgabeln der beiden Gelenke des Doppelkreuzgelenkes sind einteilig ausgebildet. Die im Abstand voneinander angeordneten äußeren Gelenkgabeln weisen eine Führungsverbindung in Form von Zentriermitteln auf, die sicherstellen, daß, wenn das Gelenk als Ganzes gebeugt wird, die beiden das Doppelgelenk bildenden Gelenke unter dem gleichen oder im wesentlichen unter dem gleichen Winkel gebeugt werden. Hierdurch wird gewährleistet, daß das Doppelgelenk zumindest im wesentlichen homokinetische (Gleichlauf-) Eigenschaften aufweist.

Zur Zentrierung ist eine Kugel- und Pfannenanordnung vorgesehen, wobei die Kugel von der äußeren Gelenkgabel des einen Kreuzgelenks und die Pfanne von der entsprechenden Gelenkgabel des anderen Kreuzgelenks gehalten wird. Entweder die Kugel oder die Pfanne muß zu der sie haltenden Gelenkgabel axial beweglich sein oder die Pfanne muß gegenüber der Kugel axial beweglich sein, um den geometrischen Verhältnissen bei Gelenkbeugung gerecht zu werden. Eine solche Kugel- und Pfannenanordnung verleiht dem Gelenk jedoch nicht unter allen Beugungsverhältnissen Gleichlaufeigenschaften, sondern nur bei einem bestimmten Konstruktionswinkel, obgleich bei anderen Beugungswinkeln die Gelenkeigenschaften den Gleichlaufeigenschaften sehr nahekommen.

Eine Schwierigkeit bei Zentriermitteln in Form einer Kugel- und Pfannenanordnung besteht darin, daß die relative axiale Bewegung bei der Beugung des Gelenkes eine Volumenänderung eines dazugehörigen geschlossenen Raumes bewirkt, die es sehr erschwert, Schmiermittel in diesem Raum festzuhalten. Dies bedeutet, daß ein wiederholtes Nachschmieren während der Lebensdauer eines Gelenkes notwendig sein kann.

Im weitesten Sinne ist es die Aufgabe der Erfindung, ein Doppelkreuzgelenk mit verbesserten Zentriermitteln in Form einer Kugel- und Pfannenanordnung zu schaffen, bei denen ein möglichst lange wirkender Schmiermittelvorrat geschaffen wird.

Erfindungsgemäß wird dies dadurch erreicht, daß die Zentriermittel ein Kugelelement, das an einer der äußeren Gelenkgabeln festgelegt ist, und eine an der anderen äußeren Gelenkgabel axial beweglich geführte Pfannenanordnung umfassen, daß die Pfannenanordnung das Kugelelement einschließt und daß die Pfannenanordnung und das Kugelelement über Dichtungen zueinander und zur anderen äußeren Gelenkgabel abgedichtet sind, und somit einen Schmiermittelvorratsraum konstanten Volumens bei den möglichen Beugewinkelstellungen des Gelenkes bilden.

Durch die Konstruktion der Pfannenanordnung als einen von Dichtungen begrenzten Raum mit konstantem Volumen, der Schmiermittel enthält, wobei die Pfannenanordnung bezüglich der anderen Gelenkgabel als Ganzes axial beweglich ist, wird das oben beschriebene Problem der Volumenänderung bei Gelenkbeugung vermieden. Damit wird erreicht, daß der Schmiermittelvorrat nicht durch die Gelenkbewegung ausgepreßt, sondern eingeschlossen gehalten bleibt.

In Ausgestaltung der Erfindung ist vorgeschlagen, daß die Pfannenanordnung an der zylindrischen Innenfläche einer axial sich erstreckenden Ausnehmung der anderen äußeren Gelenkgabel axial verschiebbar geführt ist und die Dichtungen an der Innenfläche abdichtend anliegt.

Vorzugsweise ist nach einem weiteren Vorschlag vorgesehen, daß die Pfannenanordnung primäre und sekundäre, axial voneinander entfernte und an gegenüberliegenden Seiten des Kugelelementes angeordnete Pfannenteile aufweist, daß zwischen den primären und sekundären Pfannenteilen wirkende Federelemente vorhanden sind, die die Pfannenteile aufeinanderzu drängen und einer Auseinanderbewegung der Pfannenteile entgegenwirken.

Ein bevorzugtes Ausführungsbeispiel der Erfindung ist unter Bezugnahme auf die Zeichnung beschrieben.

Es zeigt,
- Figur 1: eine Seitenansicht eines erfindungsgemäßen Doppelkreuzgelenkes, halb in Ansicht, halb im Schnitt und
- Figur 2: eine vergrößerte Ansicht eines Details des Gelenkes aus Figur 1 im Schnitt.

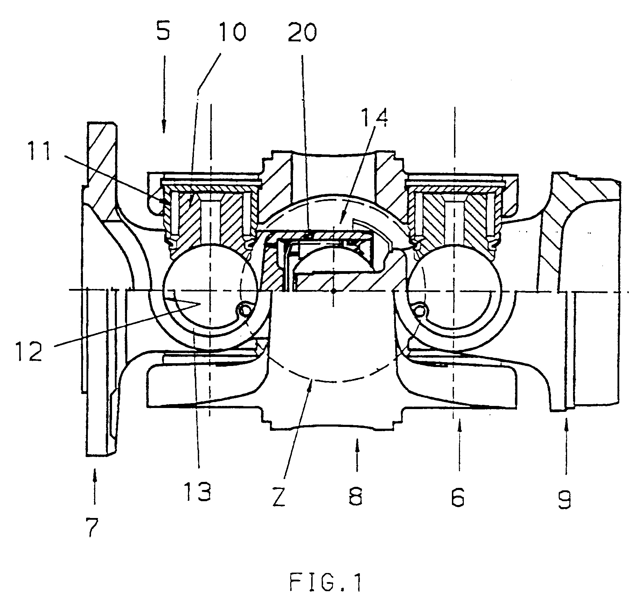

Das in Figur 1 gezeigte Doppelkreuzgelenk kann als zwei einzelne Kreuzgelenke aufgefaßt werden, allgemein angedeutet als 5,6. Das Gelenk 5 weist eine erste Gelenkgabel 7 und eine zweite Gelenkgabel 8 auf, die gleichzeitig eine Gelenkgabel des Kreuzgelenks 6 bildet, dessen zweite Gelenkgabel mit 9 gekennzeichnet ist. Die beiden inneren Gelenkgabeln bilden also eine Doppelgabel 8. Die Gelenkgabeln 7,8,9, der beiden Gelenke 5,6 sind jeweils durch Zapfenkreuze verbunden, dargestellt unter 10 für Gelenk 5, wobei die Zapfen der Zapfenkreuze 10 über Nadellager in Lagerbüchsen 11 aufgenommen und diese in als Bohrungen 12 gestalteten Öffnungen der Gelenkgabeln 7,8,9, eingesetzt und durch Sicherungsringe 13 darin fixiert sind.

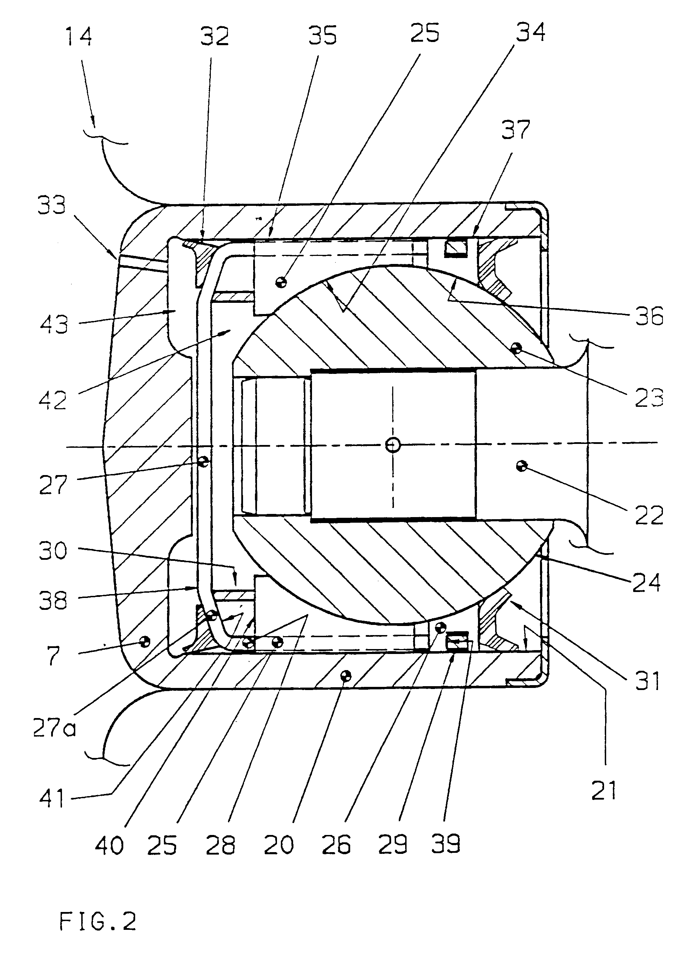

Die beiden entfernt voneinander angeordneten Gelenkgabeln 7,9 erstrecken sich über die Zapfenkreuze 10 hinaus aufeinander zu. Im Gelenkmittelpunkt sind sie durch Zentriermittel 14 miteinander verbunden, welche vergrößert in Figur 2 dargestellt sind. Die Zentriermittel stellen sicher, daß, wenn das Gelenk als Ganzes gebeugt wird, die beiden Einzelgelenke 5,6 unter dem gleichen oder im wesentlichen unter dem gleichen Winkel gebeugt werden, um dem Gelenk als Ganzes Gleichlaufeigenschaften oder im wesentlichen Gleichlaufeigenschaften zu verleihen.

Die Zentriermittel 14 umfassen eine Kugel- und Pfannenanordnung, die zwischen den beiden Gelenkgabeln 7,9 wirksam ist. Die Gelenkgabel 7 des Gelenkes 5 weist eine schalenförmige Verlängerung 20 mit einer zylindrischen Innenfläche 21 auf. Die Gelenkgabel 9 weist eine Verlängerung in Form eines Zapfens 22 auf, auf welchem ein Kugelelement 23 mit einer teilweise kugeligen Außenfläche 24 festgelegt ist. In einem axialen Abstand voneinander, entlang der Drehachse der Gelenkgabel 9 gesehen, sind auf gegenüberliegenden Seiten einer bei ungebeugtem Gelenk vertikal verlaufenden Schnittebene des Kugelelements 23 Pfannenteile, nämlich ein primäres Pfannenteil 25 und ein sekundäres Pfannenteil 26, angeordnet. Das Pfannenteil 25 besteht aus drei Segmenten, die auf dem Umfang des Kugelelementes 23 verteilt angeordnet sind; diese Segmente verfügen über teilweise kugelförmige Innenflächen 34, die zu der Außenfläche 24 des Kugelelementes 23 komplementär sind und ferner als Teilzylinder gestaltete Außenflächen 35, die zu der Innenfläche 21 der Verlängerung 20 komplementär sind. Das Pfannenteil 26 kann aus einem Ring bestehen oder aus Einzelsegmenten aufgebaut sein. Es weist ebenfalls eine hohlkugelartige Innenfläche 36, passend zur kugeligen Außenfläche 24 des Kugelelementes 23 sowie eine zur zylindrischen Innenfläche 21 der Verlängerung passende zylindrische Außenfläche 37 auf.

Die das Pfannenteil 25 bildenden Segmente sind in einem aus einem Basisteil 27 und drei Armen 28 bestehenden Blechkäfig 38 eingespannt, dessen Arme 28 sich axial erstrecken und in quer dazu verlaufenden Kopfstücken 29 enden, die in eine Nut 39 des Pfannenteils 26 eingreifen. Das Basisteil 27 hat einen Umfangabschnitt 27a mit flach abgestumpft-kegeliger Form. Zwischen diesem Umfangsabschnitt 27a und den gegenüberliegenden Endflächen 40 der Segmente des Pfannenteils 25 sitzt ein radial federnder Federring 30, wobei der Federring 30 in dem Maße, wie er sich aufweitet, an der konischen Fläche 41 des Umfangabschnittes 27a des Basisteiles 27 aufgleitet und die segmente des Pfannenteils 25 von der Basis 27 weg und in Richtung auf das Pfannenteil 26 drängt. Die Segmente des Pfannenteils 25 werden auf diese Weise in Anlage zum Kugelelement 23 und der zylindrischen Innenfläche 21 der Verlängerung 20 gedrängt, wodurch das Spiel zwischen diesen Teilen eliminiert wird. Der Neigungswinkel des konischen Umfangabschnittes 27a und damit der konischen Fläche 41 wird so gewählt, daß die Kräfte, die an den Segmenten des Pfannenteils 25 angreifen, diese nicht wieder zurück zur Basis 27 drängen können, so daß Spiel, welches durch die Aufweitung des Federringes beseitigt wurde, im Betrieb nicht wieder auftreten kann.

Am offenen Ende der Verlängerung 20 ist eine Ringdichtung 31 vorgesehen, die sowohl an der Innenfläche 21 als auch an der kugeligen Außenfläche 24 der Verlängerung 20 axial anliegt und entlang der zylindrischen Innenfläche 21 verschiebbar ist, wenn sich die Kugel- und Pfannenanordnung in relativer axialer Bewegung hierzu befindet. Die Dichtung 31 ist hierzu am Pfannenteil 26 befestigt und hält Schmiermittel im zwischen den Zentriermitteln gebildeten Hohlraum zurück. An der zur Dichtung 31 entgegengesetzten Seite der Kugel- und Pfannenanordnung befindet sich eine Dichtung 32, die am Umfangabschnitt 27a des Basisteils 27 befestigt ist und an der zylindrischen Innenfläche 21 anliegt. Das Basisteil 27 mit dem Umfangabschnitt 27a bildet eine geschlossene Fläche. Auf diese Weise entsteht zwischen den Dichtungen 31,32 ein von diesen begrenzter Schmiermittelvorratsraum 42 mit einem im wesentlichen konstanten Volumen, in dem Schmiermittel auf Vorrat gehalten wird. Eine Entlüftungsöffnung 33 verläuft durch einen Teil der Gelenkgabel 7, insbesondere die Wandung der Verlängerung 20, um Luft in den geschlossenen Hohlraum 43 der Verlängerung 20 zu- oder abzuführen und dadurch den Aufbau von Druck zu verhindern, der zum Austritt von Schmiermittel aus dem Zentriermittel führen könnte.

Auf diese Weise wird durch die Erfindung ein Gelenk mit einem Zentriermittel geschaffen, in dem Schmiermittel wirkungsvoll zurückgehalten wird, so daß die Notwendigkeit wiederholter Nachschmierung des Gelenkes während seiner Lebensdauer vermieden wird.

### Bezugszeichenliste

- 5,6: Kreuzgelenke
- 7: erste/äußere Gelenkgabel
- 8: innere Gelenkgabel
- 9: äußere Gelenkgabel
- 10: Zapfenkreuz
- 11: Lagerbüchse
- 12: Bohrung
- 13: Sicherungsring
- 14: Zentriermittel
- 20: Verlängerung
- 21: zylindrische Innenfläche
- 22: Zapfen
- 23: Kugelelement
- 24: kugelige Außenfläche
- 25: primäres Pfannenteil
- 26: sekundäres Pfannenteil
- 27: Basisteil
- 27a: Umfangsabschnitt des Basisteils
- 28: Arme
- 29: Kopfstück
- 30: Federring
- 31: Ringdichtung
- 32: Dichtung
- 33: Entlüftungsöffnung
- 34: Innenfläche
- 35: Außenfläche der Segmente des ersten Pfannenteils
- 36: Innenfläche des Ringes
- 37: zylindrische Außenfläche
- 38: Blechkäfig
- 39: Nut
- 40: Endfläche der Segmente
- 41: konische Fläche
- 42: Schmiermittelvorratsraum
- 43: Hohlraum

## Patentansprüche

1. Doppelkreuzgelenk mit zwei äußeren (7,9) und zwei inneren miteinander verbundenen Gelenkgabeln (8), wobei jeweils eine äußere (7 oder 9) und eine innere Gelenkgabel (8) über ein Zapfenkreuz (10) gelenkig miteinander verbunden sind und wobei die beiden äußeren Gelenkgabeln (7,9) durch Zentriermittel (14) einander gegenüber zentriert sind,
dadurch gekennzeichnet,
daß die Zentriermittel (14) ein Kugelelement (23), das an einer der äußeren Gelenkgabeln (9) festgelegt ist, und eine an der anderen äußeren Gelenkgabel (7) axial beweglich geführte Pfannenanordnung (25,26,27) umfassen, daß die Pfannenanordnung (25,26,27) das Kugelelement (23) einschließt und daß die Pfannenanordnung (25,26,27) und das Kugelelement (23) über Dichtungen (31,32) zueinander und zur anderen äußeren Gelenkgabel (7) abgedichtet sind und somit einen Schmiermittelvorratsraum (42) konstanten Volumens bei den möglichen Beugewinkelstellungen des Gelenkes bilden.

2. Doppelkreuzgelenk nach Anspruch 1,
dadurch gekennzeichnet,
daß die Pfannenanordnung (25,26,27) an der zylindrischen Innenfläche (21) einer axial sich erstreckenden Ausnehmung der anderen äußeren Gelenkgabel (7) axial verschiebbar geführt ist und die Dichtungen (31,32) an der Innenfläche (21) abdichtend anliegen.

3. Doppelkreuzgelenk nach einem der Ansprüche 1 oder 2,
dadurch gekennzeichnet,
daß die Pfannenanordnung primäre und sekundäre, axial voneinander entfernte und an gegenüberliegenden Seiten des Kugelelementes (23) angeordnete Pfannenteile (25,26) aufweist und daß zwischen den primären und sekundären Pfannenteilen (25,26) wirkende Federelemente (30) vorhanden sind, die die Pfannenteile (25,26) aufeinanderzu drängen und einer Auseinanderbewegung der Pfannenteile (25,26) entgegenwirken.

## Claims

1. A double universal joint having two outer (7, 9) and two inner joint yokes (8) which are connected to one another, with one outer (7 or 9) and one inner joint yoke (8) being connected to one another by a cross member (10) so as to be capable of articulation and with the two outer joint yokes (7, 9) being centred relative to one another by centring means (14),
characterised in
that the centring means (14) comprise a ball element (23) secured to one of the outer joint yokes (9) and a cup assembly (25, 26, 27) axially movably guided at the other outer joint yoke (7), that the cup assembly (25, 26, 27) encloses the ball element (23) and that the cup assembly (25, 26, 27) and the ball element (23) are sealed by seals (31, 32) relative to one another and relative to the other joint yoke (7), thereby forming a lubricant reservoir (42) with a constant volume in the possible angular positions of the joint.

2. A double universal joint according to claim 1,
characterised in
that the cup assembly (25, 26, 27) is axially movably guided on the cylindrical inner face (21) of an axially extending recess in the other outer joint yoke (7) and that the seals (31, 32) sealingly rest against the inner face (21).

3. A double universal joint according to any one of claims 1 or 2,
characterised in
that the cup assembly comprises primary and secondary cup parts (25, 26) which are arranged at an axial distance from one another and positioned at opposed ends of the ball element (23) and that there are provided spring elements (30) which operate between the primary and secondary cup parts (25, 26), which push the cup parts (25, 26) towards one another and act against the cup parts (25, 26) if they try to move apart.

## Revendications

1. Joint universel double comportant deux fourchettes extérieures de joint (7, 9) et deux fourchettes intérieures de joint (8) reliées les unes aux autres, une fourchette extérieure de joint(7 ou 9) et une fourchette intérieure de joint (8) étant reliées l'une à l'autre de manière articulée par l'intermédiaire d'un croisillon à tenons (10) et les deux fourchettes extérieures de joint (7, 9) étant centrées l'une en face de l'autre par des moyens de centrage (14), caractérisé en ce que les moyens de centrage (14) comprennent un élément à bille (23) qui est fixé sur une des fourchettes extérieures de joint (9) et un ensemble de platine (25, 26, 27) guidé à déplacement axial sur l'autre fourchette extérieure de joint (7), en ce que l'ensemble de platine (25, 26, 27) enferme l'élément à bille (23) et en ce que l'ensemble de platine (25, 26, 27) et l'élément à bille (23) sont rendus étanches l'un par rapport à l'autre et par rapport à l'autre fourche extérieure de joint (7) par des joints (31, 32) et forment ainsi une chambre de réserve de lubrifiant (42) de volume constant pour les positions angulaires possibles de l'articulation en flexion.

2. Joint universel double selon la revendication 1, caractérisé en ce que l'ensemble de platine (25, 26, 27) est guidé en déplacement axial sur la surface intérieure (21) cylindrique d'un évidement axial de l'autre fourchette extérieure de joint (7), et en ce que les joints (31, 32) reposent de manière étanche sur la surface intérieure (21).

3. Joint universel double selon l'une des revendications 1 ou 2, caractérisé en ce que l'ensemble de platine présente des éléments de platine (25, 26) primaire et secondaire éloignés axialement l'un de l'autre, agencés sur les côtés opposés de l'élément à bille, et en ce qu'il est prévu des éléments de ressorts (30) qui agissent entre les éléments de platine (25, 26) primaire et secondaire, qui pressent les éléments de platine (25, 26) les uns sur les autres, et qui s'opposent à un mouvement d'écartement des éléments de platine (25, 26).
